Europäisches Patentamt

**European Patent Office**

Office européen des brevets

(11) Veröffentlichungsnummer: **0 014 974**
**B1**

(12) **EUROPÄISCHE PATENTSCHRIFT**

(45) Veröffentlichungstag der Patentschrift:
**12.05.82**

(51) Int. Cl.³: **C 09 D 3/78,** C 08 L 27/18

(21) Anmeldenummer: **80100781.6**

(22) Anmeldetag: **15.02.80**

(54) **Überzugs- und Grundierungsmittel auf Basis eines Copolymeren aus Tetrafluorethylen und einem Perfluor(alkylvinyl)-ether und dessen Verwendung.**

(30) Priorität: **22.02.79 DE 2906787**

(43) Veröffentlichungstag der Anmeldung:
**03.09.80 Patentblatt 80/18**

(45) Bekanntmachung des Hinweises auf die Patenterteilung:
**12.05.82 Patentblatt 82/19**

(84) Benannte Vertragsstaaten:
**BE CH DE FR GB IT NL SE**

(56) Entgegenhaltungen:
**DE-B-2 110 768**
**FR-A-2 114 218**
**FR-A-2 266 722**
**US-A-2 825 664**
**US-A-3 655 604**
**US-A-3 692 558**
**US-A-3 694 392**
**US-A-4 128 693**

(73) Patentinhaber: **HOECHST AKTIENGESELLSCHAFT,
Postfach 80 03 20, D-6230 Frankfurt/Main 80 (DE)**

(72) Erfinder: **Gebauer, Gerhard, Kampenwandstrasse 20,
D-8261 Burgkirchen/Alz (DE)**
Erfinder: **Mayer, Franz, Dr., Ludwigshafener Strasse 3,
D-8261 Burgkirchen/Alz (DE)**

Überzugs- und Grundierungsmittel auf Basis eines Copolymeren aus Tetrafluorethylen
und einem Perfluor(alkylvinyl)-ether und dessen Verwendung

Als Überzugsmittel und als Grundierungsmittel für Fluorkohlenstoffpolymere eignen sich Mischungen von Chromsäure und Phosphorsäure mit Dispersionen von Fluorkohlenstoffpolymeren, wie sie beispielsweise in den US-A-2 562 117 und 2 562 118 beschrieben sind. Das Arbeiten mit Chromsäure erfordert jedoch einen hohen Aufwand an Sicherheitsmaßnahmen, da Verbindungen des sechswertigen Chroms überaus toxisch sind. Außerdem muß das sechswertige Chrom aus dem Abwasser von Spritzanlagen in einen aufwendigen Prozeß entfernt werden.

Für die Herstellung festhaftender Überzüge auf Fluorkohlenstoffpolymeren müssen solche Grundierungsmittel, welche Chromsäure und Phosphorsäure enthalten, nach dem Auftragen auf den Untergrund bei 80 bis 100°C getrocknet, anschließend auf Temperaturen von 250 bis 300°C erhitzt und wieder auf Raumtemperatur abgekühlt werden.

Erst nach dieser Wärmebehandlung, für die ein hoher Aufwand an Energie notwendig ist und ein großer Teil der Ofenkapazität einer Beschichtungsanlage verlorengeht, ist es möglich, einen weiteren festhaftenden Überzug aus Fluorkohlenstoffpolymeren aufzutragen.

In der DE-B-1 959 144 werden Überzugsmittel, insbesondere Grundierungsmittel beschrieben, die neben Fluorkohlenstoffpolymeren noch Lithiumpolysilikat enthalten. Bei deren Herstellung ist es notwendig, in einem aufwendigen Prozeß in mehreren Stufen aus Lithiumhydroxid und kolloidalem Kieselsäuresol die Lithiumpolysilikat-Lösung, die weitgehend frei von anderen Alkalimetall-Ionen sein soll, herzustellen. Die DE-B-2 110 768 beschreibt Grundschichtdispersionen, bestehend aus einer wäßrigen Lösung von Lithiumhydroxid mit darin suspendiertem, feinkörnigem, pyrogenem Siliciumdioxid und einer Dispersion eines Fluorkohlenstoffpolymeren.

Mit den in den DE-B-1 959 144 und 2 110 768 beschriebenen Grundierungs- und Überzugsmitteln lassen sich zwar Überzüge aus Fluorkohlenstoffpolymeren herstellen, die auch für Kochgeschirre geeignet sind, da hier keine Probleme bezüglich der Toxizität existieren. Die Hafteigenschaften der so hergestellten Überzüge sind zwar für viele Anwendungen, bei denen keine größeren Ansprüche gestellt werden, ausreichend, doch sind sie in ihren Hafteigenschaften denjenigen Überzügen aus Fluorkohlenstoffpolymeren, die noch Chromsäure und Phosphorsäure enthalten, unterlegen.

Der Erfindung liegt die Aufgabe zugrunde, ein Überzugsmittel, das insbesondere als Grundierungsmittel für den Auftrag von Dispersionen aus Fluorkohlenstoffpolymeren geeignet ist, zu entwickeln, das in den Hafteigenschaften mit den Überzugsmitteln, die Chromsäure und Phosphorsäure enthalten, vergleichbar ist und bei der Verwendung als Grundierungsmittel an der Luft bei Raumtemperatur getrocknet werden kann, ohne daß eine Wärmebehandlung vor dem Auftrag einer Deckschicht aus Fluorkohlenstoffpolymeren nötig ist.

Diese Aufgabe wird gemäß der vorliegenden Erfindung gelöst durch ein Überzugs- und Grundierungsmittel, das dadurch gekennzeichnet ist, daß es aus

a) 100 bis 20 Gew.-%, bezogen auf Gesamtpolymeren-Feststoff der Komponenten a) und b), eines Copolymeren aus copolymerisierten Tetrafluorethylen-Einheiten, 0,5 bis 11 Gew.-% copolymerisierten Einheiten eines Perfluor(alkylvinyl)-ethers der Formel $CF_2=CF-OR$, worin R ein Perfluoralkylrest mit 1 bis 10 C-Atomen ist, und 0 bis 12 Gew.-% copolymerisierten Einheiten des Hexafluorpropylens, oder Vinylidenfluorids, jeweils bezogen auf das Gesamtgewicht des Copolymeren, und

b) 0 bis 80 Gew.-%, bezogen auf Gesamtpolymeren-Feststoff der Komponenten a) und b), dispergierter Polytetrafluorethylen-Teilchen mit einer mittleren Teilchengröße von 0,05 bis 30 μm, und

c) 10 bis 70 Gew.-% der Gewichtssumme a) plus b) plus c) an Lithiumhydroxid und suspendiertem, feinteiligem, auf thermischem Wege erzeugten $SiO_2$, wobei das Molverhältnis $LiOH : SiO_2$ 1 : 0,5 bis 1 : 30 beträgt, sowie

d) aus Wasser als flüssigem Träger besteht.

Das als Komponente a) eingesetzte Copolymere besteht aus 0,5 bis 11, vorzugsweise 1,5 bis 6,0 Gew.-% an copolymerisierten Einheiten eines Perfluor(alkylvinyl)-ethers der Formel $CF_2=CF-OR$, worin R ein Perfluoralkylrest mit 1 bis 10, vorzugsweise 2 bis 4 und insbesondere mit 3 C-Atomen ist, und aus 0 bis 12, vorzugsweise 0 bis 6,5 Gew.-% an copolymerisierten Einheiten des Vinylidenfluorids, oder vorzugsweise Hexafluorpropylens.

Der Rest, jeweils bezogen auf das Gesamtgewicht des Copolymeren, besteht aus copolymerisierten Einheiten des Tetrafluorethylens. Insbesondere bevorzugt als Komponente a) ist ein Copolymeres, bestehend aus 0,4 bis 6,5 Gew.-% copolymerisierten Einheiten des Hexafluorpropylens und 1,5 bis 6,0 Gew.-% copolymerisierten Einheiten des Perfluor-(n-propylvinyl)-ethers, wobei ebenfalls der Rest aus copolymerisierten Einheiten des Tetrafluorethylens besteht. Die Herstellung solcher Copolymeren ist bekannt und beispielsweise beschrieben in den US-A-3 132 123, 3 235 537, 3 528 954, 3 642 742, 3 635 926 und die der bevorzugten Terpolymeren in der US-A-4 029 868 und in der DE-A-2 639 109.

Das erfindungsgemäße Überzugsmittel kann neben der Komponente a) als Komponente b) in Wasser dispergierte Polytetrafluorethylen-Teilchen in einem Anteil von 0 bis 80, vorzugsweise 0 bis 50 Gew.-% bezogen auf das Gesamtgewicht des Polymeren-Feststoffs der Komponenten a) plus b) enthalten. Diese Polytetrafluorethylen-Teilchen können sowohl als Teilchen kolloidaler Größe dispergiert oder als Teilchen überkolloidaler Teilchengröße suspendiert sein. Die mittlere Teilchengröße dieser Polytetrafluorethylen-Teilchen soll 0,05 bis 30 µm betragen, bevorzugt ist ein Bereich von 0,1 bis 3 µm. Unter Polytetrafluorethylen soll dabei nicht nur das übliche hochmolekulare Polytetrafluorethylen verstanden werden, sondern dieser Begriff erfaßt im Sinne dieser Erfindung auch die sogenannten Polytetrafluorethylen-Wachse, die durch Abbau von hochmolekularem Polytetrafluorethylen oder durch Telomerisationsreaktionen von Tetrafluorethylen gebildet werden, und die im Rahmen der Erfindung mit Molekulargewichten bis herunter zu 10 000, vorzugsweise bis herunter zu 100 000 eingesetzt werden können.

Bevorzugt sind jedoch diejenigen Überzugs- und Grundierungsmittel, die als Fluorkohlenstoffpolymer-Komponente ausschließlich die Copolymeren der Komponente a) enthalten.

Als Komponente c) enthält das erfindungsgemäße Überzugs- und Grundierungsmittel ein Gemisch aus Lithiumhydroxid und in Wasser suspendiertem, feinteiligem, auf thermischem Wege erzeugtem Siliciumdioxid. Das Molverhältnis von LiOH : SiO$_2$ in dieser Mischung ist 1 : 0,5 bis 1 : 30, vorzugsweise 1 : 1 bis 1 : 12. Diese Mischung der Komponente c) ist im erfindungsgemäßen Überzugsmittel in einem Anteil von 10 bis 70 Gew.-%, vorzugsweise 25 bis 60 Gew.-% anwesend, berechnet auf die Gewichtssumme der Komponenten a), gegebenenfalls b) und c). Das im Rahmen dieser Mischung eingesetzte feinteilige, auf thermischem Wege hergestellte Siliciumdioxid ist ein Handelsprodukt. Es wird nach bekannten Verfahren entweder durch Reaktion von bestimmten Siliciumverbindungen wie zum Beispiel SiCl$_4$ oder Siliciumwasserstoffen durch Verbrennung erzeugt oder durch Sublimation von Siliciumverbindungen wie Quarz, Kieselsäure und andere im Lichtbogen gewonnen. Dieses, auf thermischem Wege hergestellte SiO$_2$ liegt fast ausschließlich in Form agglomerierter Teilchen vor, die eine relativ breite Teilchengrößen-Verteilung besitzen, die sich im Bereich 0,01 bis 50, vorzugsweise 0,05 bis 25 µm bewegt, wobei die mittlere Teilchengröße etwa bei 0,5 bis 40, vorzugsweise 2 bis 20 µm liegt.

Zur Herstellung solcher Siliciumdioxid-Suspensionen in einer Lithiumhydroxid-Lösung wird das Lithiumhydroxid in entsalztem Wasser gelöst und das feinkörnige, thermisch behandelte SiO$_2$ eingerührt.

Schließlich besteht das erfindungsgemäße Überzugs- und Grundierungsmittel aus der Komponente d), nämlich Wasser als flüssigem Träger, das vorzugsweise in einem Anteil anwesend ist, daß der Anteil der Komponenten a), gegebenenfalls b) und c) 12 bis 60, vorzugsweise 15 bis 40 Gew.-% des Gesamtgewichts des Überzugsmittels beträgt.

Wird das erfindungsgemäße Überzugsmittel als Einschichtsystem verwendet, so können ihm übliche Füllstoffe und Pigmente wie z. B. Eisenoxid, Ruß, Glimmer und Titandioxid hinzugefügt werden, wobei der Anteil 1 bis 40, vorzugsweise 5 bis 25 Gew.-%, bezogen auf das Gewicht der Komponenten a) plus b) plus c), beträgt. Gegebenenfalls können solche Pigmente auch bei der Verwendung als Grundschicht zugesetzt werden.

Das Copolymere der Komponente a) wird vorzugsweise in Form einer kolloidalen Dispersion mit einer mittleren Teilchengröße von 0,05 bis 3 µm eingesetzt. Dafür können kolloidale Dispersionen mit einem Feststoffgehalt von 10 bis 20 Gew.-% an Polymer-Feststoff verwendet werden, wie sie direkt aus der Emulsionspolymerisation der genannten Comonomeren erhältlich sind. Vorzugsweise werden solche Dispersionen jedoch zunächst mittels bekannter Methoden, beispielsweise durch Dekantieren, auf einen Polymer-Feststoffgehalt von 20 bis 60 Gew.-% aufkonzentriert. Die Copolymeren der Komponente a) können jedoch auch in Form eines aus kolloidalen Dispersionen durch Koagulation (beispielsweise durch Ausrühren unter Anwendung hoher Scherkräfte oder durch Zusatz von Elektrolyten) gewonnenen Pulvers eingesetzt werden. Derartige Pulver werden dann in Wasser redispergiert, wobei die so erhaltenen Dispersionen mittlere Teilchengrößen im Bereich von 3 bis 30 µm aufweisen. Schließlich können auch Suspensionspolymerisate verwendet werden, wie sie durch das Verfahren der Suspensionspolymerisation der genannten Comonomeren unter Einsatz geringer Mengen von Emulgatoren erhältlich sind, die gleichfalls eine mittlere Teilchengröße von 3 bis 30 µm aufweisen oder auf diese Teilchengröße gemahlen werden können, wobei diese Pulver ebenfalls Teilchengrößen im Bereich 3 bis 30 µm für den Einsatz im erfindungsgemäßen Überzugsmittel besitzen sollen.

Vorzugsweise wird das erfindungsgemäße Überzugsmittel hergestellt durch Zusammenmischen von wäßrigen Dispersionen oder Suspensionen der Komponente a) mit der oben beschriebenen wäßrigen Suspension aus wäßrigem Lithiumhydroxid und auf thermischem Wege hergestellten SiO$_2$. Soweit die Komponente b) anwesend ist, wird sie ebenfalls vorzugsweise als wäßrige Dispersion oder Suspension eingesetzt, wobei die Reihenfolge des Zusammenmischens beliebig ist, das heißt, es kann zuerst die Komponente a) oder die Komponente b) mit c) allein vermischt und die jeweils andere Komponente hinzugegeben werden. Ebenso können auch die Komponenten a) und b) zunächst für sich gemischt und dann als Ganzes zu c) hinzugegeben werden. Wird eine der beiden Komponenten a) und b) in Form eines Pulvers und die andere in Form einer kolloidalen Dispersion eingesetzt, so ist zunächst die pulverförmige Komponente in der Komponente c), beispielsweise mittels eines hochtourigen Rührers oder anderer Dispergiereinrichtungen, zu dispergieren, worauf anschließend die andere Komponente in Form der kolloidalen Dispersion hinzugefügt wird. Soweit das erfindungsgemäße Überzugs- und Grundierungsmittel Pigmente enthält, werden diese vorzugsweise zu der Komponente c) vor der Vermischung hinzugefügt, sie können jedoch auch zu a) oder b) oder deren Mischung gegeben werden, falls diese in Form von Suspensionen vorliegen.

Das erfindungsgemäße Überzugsmittel eignet sich als Einschichtsystem zum Beschichten aller Werkstoffe, die dem nachfolgenden Sintervorgang thermisch gewachsen sind. Dies sind insbesondere Metalle, Glas oder keramische Substrate. Wenn eine Metalloberfläche zu beschichten ist, wird diese durch Sandstrahlen oder Ätzen, zum Beispiel mit verdünnten Mineralsäuren, zur Verbesserung der Haftung aufgerauht.

Der Auftrag erfolgt nach bekannten Methoden, wie beispielsweise Tauchen, Aufwalzen oder Aufspritzen. Wird das erfindungsgemäße Überzugsmittel als Einschichtsystem verwendet, muß der Überzug nach dem Auftrag bei 80 bis 300°C getrocknet und dann bei 290 bis 460°C, vorzugsweise bei 320 bis 400°C, eingebrannt werden.

Die Trocknungs- und Sinterzeiten sollen jeweils etwa 5 bis 30 Minuten betragen. Bei einem Auftrag werden Schichtdicken von etwa 5 bis 30 µm, vorzugsweise 5 bis 10 µm, erzielt. Der Auftrag mehrerer Schichten zur Erzielung großer Schichtdicken (> 30 µm) ist ebenfalls möglich.

Bei Verwendung des Überzugsmittels als Grundierungsmittel für weitere Überzüge von Fluorkohlenstoffpolymeren, insbesondere von Polytetrafluorethylen, wird der zu beschichtende Untergrund, falls es sich um eine glatte Oberfläche handelt, ebenfalls durch Sandstrahlen oder Ätzen aufgerauht. Anschließend erfolgt der Auftrag des Grundierungsmittels mittels Spritzpistole oder anderer Verfahren. Der Vorteil des erfindungsgemäßen Mittels bei Anwendung als Grundierung liegt darin, daß nach dem Auftrag und anschließendem kurzzeitigem Trocknen der Grundierung an der Luft, etwa bei Raumtemperaturen oder wenig darüber (15 bis 40°C), die Deckschicht, bestehend aus Fluorkohlenstoffpolymeren, sofort aufgetragen werden kann und trotzdem die guten Hafteigenschaften nicht leiden. Gegebenenfalls kann auf diese Trocknung sogar völlig verzichtet und die Deckschicht auf die noch feuchte Grundschicht aufgebracht werden, wobei dennoch eine ausgezeichnete Haftung erreicht wird. Grundierungsmittel auf Basis Phosphor- und/oder Chromsäure müssen nach dem Auftrag bei 80 bis 100°C und 250 bis 300°C getrocknet und gesintert sowie anschließend abgekühlt werden, wobei erst diese Wärmebehandlung eine gute Verbindung zwischen der Grund- und einer anschließend aufgetragenen Deckschicht gewährleistet, während bei dem erfindungsgemäßen Grundierungsmittel ein Trocknen an der Luft im genannten Temperaturbereich vollkommen ausreichend ist.

Als Deckschicht kann eine reine Polytetrafluorethylen-Dispersion als auch eine mit Pigmenten und bekannten anionischen, kationischen oder nichtionischen Netzmitteln, Verlaufmitteln und Filmbildern modifizierte Dispersion verwendet werden. Als Netzmittel haben sich beispielsweise bewährt mit 8 bis 12 Mol Ethylenoxid oxethyliertes Nonylphenol oder Natriumlaurylsulfat, als Verlaufmittel werden Toluol oder Xylole und als Filmbildner Siliconharze, wie in den US-A-2 462 242 und 2 470 593 beschrieben, verwendet.

Als Deckschicht sind ferner geeignet Dispersionen von Copolymeren, hergestellt aus Perfluor(alkylvinyl)-ethern und Tetrafluorethylen und gegebenenfalls noch einem Drittmonomeren wie Hexafluorpropylen oder Vinylidenfluorid, insbesondere in der gleichen Zusammensetzung wie die Komponente a). Auch Mischungen aus Polytetrafluorethylen-Dispersionen und solchen Copolymerdispersionen können als Deckschicht verwendet werden. Derartige Zusammensetzungen können wie die Polytetrafluorethylen-Dispersion mit Pigmenten, Netzmitteln, Verlaufmitteln und Filmbildnern modifiziert werden.

Das erfindungsgemäße Überzugs- und Grundierungsmittel wird bevorzugt zur Herstellung von festhaftenden Antihaftbeschichtungen oder Grundierungen für Koch-, Back-, Brat- und Grillvorrichtungen verwendet.

Weitere Einsatzmöglichkeiten sind zum Beispiel die Beschichtung von Bügeleisensohlen, Gleitelementen, Dosiervorrichtungen, wo zusätzlich eine starke mechanische Beanspruchung der Beschichtung erfolgt und daher die vorteilhaften Eigenschaften besonders zur Geltung kommen.

Die erfindungsgemäßen Überzugs- und Grundierungsmittel weisen insbesondere eine überraschende Verbesserung der Haftung am Substrat gegenüber solchen Überzugsmitteln auf, die anstelle der erfindungsgemäßen Komponente a) ein Copolymeres aus Tetrafluorethylen und Hexafluorpropylen enthalten.

Die Erfindung wird durch folgende Beispiele erläutert:

Beispiel 1

11,2 g Lithiumhydroxid werden in 182,0 g entsalztem Wasser gelöst. In diese Lösung werden 28,0 g auf thermischem Wege hergestelltes Siliciumdioxid eingerührt und mit einem Propellerrührer 1 Stunde dispergiert. Die Suspension wird 24 Stunden stehengelassen. Anschließend werden 280,0 g einer Dispersion eines Terpolymeren, welches aus 1,5 Gew.-% Hexafluorpropylen-Einheiten, 3,5 Gew.-% Perfluor-(n-propylvinyl)-ether-Einheiten und 95 Gew.-% Tetrafluorethylen-Einheiten besteht, einen Schmelzindex von 30 g/10 min (372°C, 5 kg Belastung) und einen Schmelzpunkt von 307°C besitzt, dazugerührt. Diese Dispersion wurde vorher durch Dekantieren auf einen Feststoffgehalt von 50 Gew.-% aufkonzentriert.

Aluminiumplatten werden mit Korund (100 bis 120 μm Korngröße) bis zu einer Rauhtiefe von 5 bis 10 μm sandgestrahlt. Auf die so vorbereitete Oberfläche wird mittels Spritzpistole die obige Grundschichtdispersion, 5 bis 10 μm dick, aufgespritzt. Die beschichteten Aluminiumplatten werden 10 min bei Raumtemperatur stehengelassen, und anschließend wird eine 60 Gew.-% Feststoff enthaltende Polytetrafluorethylen-Dispersion aufgetragen. Dann werden beide Schichten 10 min bei 90°C und dann 10 min bei 250°C getrocknet und 10 min bei 400°C gesintert.

An der erhaltenen Beschichtung wird die Haftfestigkeit nach DIN-Norm 53 151 (Gitterschnitt-Test) geprüft. Man erhält eine Haftfestigkeit von GT 0.

### Beispiel 2

4,7 g Lithiumhydroxid werden in 198 g entsalztem Wasser gelöst. In dieser Lösung werden 47,0 g auf thermischem Wege hergestelltes SiO₂, wie in Beispiel 1 beschrieben, eingerührt. Danach werden 47,1 g einer Dispersion, die 50 Gew.-% eines Terpolymeren enthält und anschließend 50 g einer Dispersion mit 50 Gew.-% an hochmolekularem Polytetrafluorethylen dazugemischt. Das Terpolymere besteht aus 94,1 Gew.-% Tetrafluorethylen-Einheiten, 1,5 Gew.-% Hexafluorpropylen-Einheiten und 4,4 Gew.-% Perfluor(n-propylvinyl)ether-Einheiten und besitzt einen Schmelzpunkt von 304°C. Der Schmelzindex beträgt 24,5 g/10 min bei einer Belastung von 5 kg und bei 372°C.

Die so erhaltene Suspension wird auf wie in Beispiel 1 vorbereitete Aluminiumplatten, etwa 5 bis 10 μm stark, mittels Spritzpistole aufgetragen.

Anschließend wird sofort ohne Trocknung eine zweite Dispersion auf die noch feuchte Beschichtung aufgetragen. Die Dispersion besitzt folgende Zusammensetzung: 30 Gewichtsteile einer 50gew.-%igen Dispersion des zuvor beschriebenen Terpolymerisates, 70 Gewichtsteile einer 60gew.-%igen PTFE-Dispersion, 1 Gewichtsteil Natriumlaurylsulfat, 6,1 Gewichtsteile eines nichtionischen Netzmittels (Octylphenol oxethyliert mit im Mittel 9 Ethylenoxid-Einheiten), 3 Gewichtsteile Glykol, 1 Gewichtsteil Farbruß, 17,1 Gewichtsteile Titandioxid, 10 Gewichtsteile einer Lösung von 50 Gew.-% Siliconharz (Methylphenylpolysiloxan) in Ethylacetat und Xylol (2 : 1), 5 Gewichtsteile Xylol und 5 Gewichtsteile Tetralin.

Beide Schichten werden 10 min bei 90°C und 10 min bei 250°C getrocknet und 10 min bei 400°C eingebrannt. Man erhält einen gut haftenden, antiadhäsiven Überzug mit ausgezeichneten Hafteigenschaften. Der Gitterschnitt-Test nach DIN 53 151 ergibt einen Wert von GT 0.

### Beispiel 3

11,2 g Lithiumhydroxid werden in 182,0 g entsalztem Wasser gelöst. In diese Lösung werden 28,0 g auf thermischem Wege hergestelltes Siliciumdioxid eingerührt. Die Suspension wird 24 Stunden stehengelassen. Anschließend werden 280 g einer Dispersion eines Terpolymeren (Zusammensetzung wie in Beispiel 1) dazugerührt. In diese Mischung werden 77 g einer Suspension, bestehend aus 7 Gew.-% Farbruß und 92 Gew.-% Wasser und 1 Gew.-% eines nichtionischen Netzmittels (Octylphenol, oxethyliert mit im Mittel 9 Ethylenoxid-Einheiten) dazugegeben.

Die Mischung wird auf sandgestrahlte Aluminiumplatten mittels Spritzpistole aufgetragen und 10 min bei 90°C, 10 min bei 250°C und 10 min bei 400°C eingebrannt. Man erhält einen schwarzen, gut haftenden Überzug. Gitterschnitt-Test GT 0.

### Beispiel 4

0,746 g Lithiumhydroxid werden in 82,0 g entsalztem Wasser gelöst. In diese Lösung werden 7,5 g auf thermischem Wege hergestelltes Siliciumdioxid eingerührt und mit einem Propellerrührer ca. 1 Stunde dispergiert. Die Suspension wird 24 Stunden stehengelassen. Anschließend werden 159,0 g einer Dispersion eines Terpolymeren (Zusammensetzung wie Beispiel 1), das einen Schmelzpunkt von 304°C und einen Schmelzindex bei einer Belastung von 5 kg und bei einer Temperatur von 372°C von 24,5 g/10 min besitzt, dazugerührt. Die Dispersion wurde vorher durch Dekantieren auf einen Feststoff-Gehalt von 50 Gew.-% aufkonzentriert.

Aluminiumplatten werden, wie in Beispiel 1 beschrieben, vorbehandelt und beschichtet. Die beschichteten Aluminiumplatten werden 10 min bei Raumtemperatur stehengelassen.

Anschließend wird eine Deckschichtdispersion mittels Spritzpistole aufgetragen. Diese Dispersion besitzt folgende Zusammensetzung:

100 Gewichtsteile einer 60gew.-%igen Polytetrafluorethylen-Dispersion, 1 Gewichtsteil Natriumlaurylsulfat, 6,1 Gewichtsteile eines nichtionischen Netzmittels (Octylphenol, oxethyliert mit im Mittel 9 Ethylenoxid-Einheiten), 3 Gewichtsteile Glykol, 1 Gewichtsteil Farbruß, 17,1 Gewichtsteile Titandioxid, 10 Gewichtsteile einer Lösung von 50 Gew.-% Siliconharz in Ethylacetat und Xylol (2 : 1), 5 Gewichtsteile Xylol und 5 Gewichtsteile Tetralin.

Beide Schichten werden 10 min bei 90°C und 10 min bei 250°C getrocknet und 10 min bei 400°C eingebrannt. Auf der erhaltenen Beschichtung wird die Haftfestigkeit nach DIN 53 151

(Gitterschnitt-Test) geprüft. Man erhält eine Haftfestigkeit von GT 0 bis GT 1.

### Beispiel 4a

### (Vergleichsversuch)

0,746 g Lithiumhydroxid werden in 82,0 g Wasser gelöst. In diese Lösung werden 7,5 g auf thermischem Wege hergestelltes Siliciumdioxid eingerührt und mit einem Propellerrührer 1 Stunde dispergiert. Die Suspension wird 24 Stunden stehengelassen. Anschließend werden 159,0 g einer Dispersion, welche 50 Gew.-% eines Copolymeren, bestehend aus 22 Gew.-% Hexafluorpropylen- und 78 Gew.-% Tetrafluorethylen-Einheiten, dazugerührt.

Diese Grundschichtdispersion wird, wie in Beispiel 4 beschrieben, aufgetragen und mit der angegebenen Deckschicht versehen, getrocknet und eingebrannt.

Die Haftfestigkeitsprüfung nach DIN 53 151 ergibt einen Wert von GT 4.

### Beispiel 5

3,1 g Lithiumhydroxid werden in 106 g entsalztem Wasser gelöst. Zu dieser Lösung werden 30,9 g auf thermischem Wege hergestelltes Siliciumdioxid dazugerührt. Die erhaltene Suspension wird 24 Stunden stehengelassen. Anschließend werden 110 g einer Dispersion, die 50 Gew.-% eines Terpolymeren (Zusammensetzung wie Beispiel 1, charakterisiert wie Beispiel 4), enthält, dazugemischt.

### Beispiel 5a

### (Vergleichsversuch)

3,1 g Lithiumhydroxid werden in 106 g entsalztem Wasser gelöst. Zu dieser Lösung werden 30,9 g auf thermischem Wege hergestelltes Siliciumdioxid dazugeführt. Die erhaltene Suspension wird 24 Stunden stehengelassen. Anschließend werden 110 g einer Dispersion, die 50 Gew.-% eines Copolymeren aus Hexafluorpropylen und Tetrafluorethylen (Zusammensetzung wie Beispiel 4a), dazugerührt.

Die in Beispiel 5 und 5a beschriebenen Grundschichtdispersionen werden auf sandgestrahlte Aluminiumplatten, wie in Beispiel 4 beschrieben, aufgetragen, mit der dort angegebenen Deckschicht versehen, getrocknet und eingebrannt.

Die Beschichtungen mit der Grundschichtdispersion aus Beispiel 5 besitzen nach DIN 53 151 eine Haftfestigkeit von GT 0 bis GT 1, während die Beschichtungen mit der Grundschichtdispersion aus Beispiel 5a eine Haftfestigkeit von GT 4 aufweisen.

### Beispiel 6

1,49 g Lithiumhydroxid werden in 1200 g entsalztem Wasser gelöst. In diese Lösung werden 92,9 g auf thermischem Wege hergestelltes Siliciumdioxid eingerührt. Die so erhaltene Suspension wird 24 Stunden stehengelassen. Anschließend werden 142 g einer 50gew.-%igen Dispersion eines Terpolymeren, welches aus 1,5 Gew.-% Hexafluorpropylen-Einheiten, 3,2 Gew.-% Perfluor(n-propylvinyl)ether-Einheiten und 95,3 Gew.-% Tetrafluorethylen-Einheiten besteht. Das Terpolymere besitzt einen Schmelzpunkt von 310° C und einen Schmelzindex von 15 g/10 min bei 372° C und 5 kg Belastung.

Die Mischung wird mittels Spritzpistole auf sandgestrahlte Aluminiumplatten aufgetragen und 5 min an der Luft bei Raumtemperatur getrocknet.

Anschließend wird eine wie in Beispiel 2 beschriebene Deckschicht-Dispersion aufgetragen. Beide Schichten werden jeweils 10 min bei 90° C und 250° C getrocknet und bei 400° C gesintert.

Man erhält einen gut haftenden, antiadhäsiven Überzug mit guten Hafteigenschaften. Der Gitterschnitt-Test nach DIN 53 151 ergibt einen Wert von GT 0 bis GT 1.

### Beispiel 7

11,2 g Lithiumhydroxid werden in 475,2 g entsalztem Wasser gelöst, und anschließend werden 111,8 g auf thermischem Wege hergestelltes Siliciumdioxid eingerührt. Diese Suspension wird nach 24 Stunden mit 1386,5 g einer Suspension eines Copolymeren gemischt. Das Copolymere besteht aus 3,3 Gew.-% Perfluor(n-propylvinyl)ether-Einheiten und 96,7 Gew.-% Tetrafluorethylen-Einheiten und besitzt einen Schmelzindex von 12,5 g/10 min bei einer Belastung von 5 kg und bei 372° C.

Die Suspension des Copolymeren wurde durch 12stündiges Abreiben einer Aufschlämmung von 300 g des Copolymeren in 1185 g Wasser und 15 g Octylphenol, oxethyliert mit im Mittel 9 Ethylenoxid-Einheiten, in einer Kugelmühle hergestellt.

Die Mischung wird wie in Beispiel 1 beschrieben auf sandgestrahlte Aluminiumplatten aufgetragen.

Nach der Trocknung von 10 min bei Raumtemperatur wird wie in Beispiel 1 beschrieben eine Polytetrafluorethylen-Dispersion mit 60% Feststoff aufgetragen. Die erhaltene Beschichtung besitzt eine Haftfestigkeit nach DIN-Norm 53 151 von GT 0.

### Beispiel 8

3,1 g Lithiumhydroxid werden in 50,3 g entsalztem Wasser gelöst und 15,4 g auf thermischem

Wege hergestelltes SiO₂ eingerührt. Die Suspension wird 24 Stunden stehengelassen. Anschließend werden 14,8 g einer Dispersion eines Terpolymeren dazugemischt. Die Dispersion des Terpolymeren und das Terpolymere selbst haben die gleiche Zusammensetzung wie die in Beispiel 6.

Die so erhaltene Suspension wird wie in Beispiel 1 beschrieben auf Aluminiumplatten aufgetragen. Nach einer Trockenzeit von 10 min an der Luft wird eine zweite Schicht mit einer Zusammensetzung wie in Beispiel 2 aufgetragen und jeweils 10 min bei 90°C und 250°C getrocknet und bei 400°C gesintert.

Man erhält eine Antihaftbeschichtung mit einer Haftfestigkeit nach DIN 53 151 von GT 0.

### Beispiel 9

3,1 g Lithiumhydroxid werden in 107,2 g entsalztem Wasser gelöst. In diese Lösung werden 30,9 g auf thermischem Wege hergestelltes SiO₂ eingerührt und mit einem Propellerrührer ca. 1 Stunde dispergiert. Die Suspension wird 24 Stunden stehengelassen. Anschließend werden 55 g einer 50gew.-%igen Dispersion eines Terpolymeren eingerührt. Das Terpolymere besteht aus 6,3 Gew.-% Hexafluorpropylen-Einheiten, 2,3 Gew.-% Perfluor(n-propylvinyl)-ether-Einheiten und 91,4 Gew.-% Tetrafluorethylen-Einheiten. Der Schmelzindex beträgt 8,8 g/10 min bei 372°C und 5 kg Belastung und der Schmelzpunkt 280°C.

Die so erhaltene Suspension wird wie in Beispiel 1 auf Aluminiumplatten aufgetragen.

Eine wie in Beispiel 1 darauf aufgebrachte Polytetrafluorethylen-Schicht besitzt eine Haftfestigkeit nach DIN 53 151 von GT 0.

### Beispiel 10

Beispiel 2 wird wiederholt mit der Abänderung, daß anstelle der Dispersion von Polytetrafluorethylen mit dem üblichen hohen Molekulargewicht 50 g einer Dispersion mit 50 Gew.-% Polytetrafluorethylen-Wachs mit einem Molekulargewicht von 150 000 eingesetzt werden, das durch Emulsionspolymerisation von Tetrafluorethylen in Gegenwart von Chloroform hergestellt worden war.

Das Aufbringen der Grund- und Deckschicht (gleiche Zusammensetzung wie in Beispiel 2) wird vorgenommen wie in Beispiel 2.

Der erhaltene Überzug besitzt eine Haftfestigkeit nach dem Gitterschnitt-Test von GT 0 bis GT 1.

### Patentansprüche

1. Überzugs- und Grundierungsmittel, dadurch gekennzeichnet, daß es aus

a) 100 bis 20 Gew -%, bezogen auf Gesamtpolymeren-Feststoff der Komponenten a) und b), eines Copolymeren aus copolymerisierten Tetrafluorethylen-Einheiten, 0,5 bis 11 Gew.-% copolymerisierten Einheiten eines Perfluor(alkylvinyl)-ethers der Formel CF₂=CF—OR, worin R ein Perfluoralkylrest mit 1 bis 10 C-Atomen ist, und 0 bis 12 Gew.-% copolymerisierten Einheiten des Hexafluorpropylens oder Vinylidenfluorids, jeweils bezogen auf das Gesamtgewicht des Copolymeren, und

b) 0 bis 80 Gew.-%, bezogen auf Gesamtpolymeren-Feststoff der Komponenten a) und b), dispergierter Polytetrafluorethylen-Teilchen mit einer mittleren Teilchengröße von 0,05 bis 30 μm, und

c) 10 bis 70 Gew.-% der Gewichtssumme a) plus b) plus c) an Lithiumhydroxid und suspendiertem feinteiligem, auf thermischem Wege erzeugtem SiO₂, wobei das Molverhältnis LiOH zu SiO₂ 1 : 0,5 bis 1 : 30 beträgt, sowie

d) aus Wasser als flüssigem Träger besteht.

2. Überzugs- und Grundierungsmittel nach Anspruch 1, dadurch gekennzeichnet, daß die Komponente a) im Copolymeren aus 0,4 bis 6,5 Gew.-% copolymerisierten Einheiten des Hexafluorpropylens, 1,5 bis 6,0 Gew.-% copolymerisierten Einheiten des Perfluor(n-propylvinyl)-ethers sowie aus copolymerisierten Tetrafluorethylen-Einheiten besteht.

3. Überzugs- und Grundierungsmittel nach Anspruch 1 und 2, dadurch gekennzeichnet, daß es aus 12 bis 60 Gew.-% Feststoff der Gewichtssumme der Komponenten a) plus b) plus c) sowie aus Wasser besteht.

4. Überzugs- und Grundierungsmittel nach Ansprüchen 1 bis 3, dadurch gekennzeichnet, daß es zusätzlich Pigmente und Füllstoffe enthält.

5. Verwendung der Überzugs- und Grundierungsmittel gemäß Anspruch 1 bis 4 zur Beschichtung von Metallen, Glas oder keramischen Substraten im Einschicht-Verfahren.

6. Verwendung der Überzugs- und Grundierungsmittel gemäß Anspruch 1 bis 4 zur Beschichtung von Metallen, Glas oder keramischen Substraten, wobei anschließend mindestens eine Deckschicht aus Fluorkohlenstoff-Polymeren aufgebracht wird.

### Claims

1. Coating and primer formulation which is characterised in that it consists of

a) from 100 to 20 weight %, relative to the total polymer solids of the components a) and b), of a copolymer of copolymerised tetrafluorethylene units; from 0.5 to 11 weight % of copolymerised units of a perfluoro(alkylvinyl) ether of the formula CF₂=CF—OR, in which R is a perfluoroalkyl radical having from 1 to 10 carbon atoms; and from 0 to 12 weight % of copolymerised units of hexafluoropropylene or vinylidene fluoride, each relative to the total weight of the copolymer;

b) from 0 to 80 weight %, relative to the total polymer solids of components a) and b), of dispersed polytetrafluoroethylene particles having an average grain size of from 0.05 to 30 µm;

c) from 10 to 70 weight % of the weight sum of a) plus b) plus c) of lithium hydroxide and suspended fine-particle $SiO_2$ produced by thermal treatment; the molar ratio $LiOH : SiO_2$ being from 1 : 0.5 to 1 : 30; and

d) water as liquid carrier.

2. The coating and primer formulation as claimed in claim 1, characterised in that the component a) in the copolymer contains from 0.4 to 6.5 weight % of copolymerised units of hexafluoropropylene and 1.5 to 6.0 weight % of copolymerised units of perfluoro-(n-propylvinyl) ether and copolymerised tetrafluoroethylene units.

3. The coating and primer formulation as claimed in claims 1 and 2, characterised in that it consists of from 12 to 60 weight % of solids relative to the weight sum of the components a) plus b) plus c), and of water.

4. The coating and primer formulation as claimed in claims 1 to 3, characterised in that it contains pigments and fillers in addition.

5. The use of the coating and primer formulation as claimed in claims 1 to 4 for coating metals, glass, or ceramic substrates in a one-coat process.

6. The use of the coating and primer formulation as claimed in claims 1 to 4 for coating metals, glass, or ceramic substrates comprising the subsequent coating by a top-coat being composed of fluoropolymers.

## Revendications

1. Produit de revêtement et d'apprêt, caractérisé en ce qu'il consiste en:

a) 100 à 20% en poids, par rapport à la matière sèche polymère totale des constituants a) et b), d'un copolymère formé de motifs tétrafluoréthylène copolymérisés, 0,5 à 11% en poids de motifs copolymérisés d'un éther de perfluoroalkyle et de perfluorovinyle de formule $CF_2 = CF - OR$, où R est un radical perfluoroalkyle ayant 1 à 10 atomes de carbone, et 0 à 12% en poids de motifs copolymérisés d'hexafluoropropylène ou de fluorure de vinylidène, chaque fois par rapport au poids total du copolymère,

b) 0 à 80% en poids, par rapport à la matière sèche polymère totale des constituants a) et b), de particules de polytétrafluoréthylène dispersées et présentant une grosseur moyenne de particules de 0,05 à 30 micromètres, et

c) 10 à 70% en poids de la somme pondérale a) plus b) plus c) d'ydroxyde de lithium et de $SiO_2$ produit par voie thermique, finement divisé et en suspension, le rapport molaire $LiOH : SiO_2$ étant de 1 : 0,5 à 1 : 30, et aussi en:

d) de l'eau comme véhicule liquide.

2. Produit de revêtement et d'apprêt selon la revendication 1, caractérisé en ce que le constituant a) consiste en un copolymère de 0,4 à 6,5% en poids de motifs copolymérisés de l'hexafluoropropylène, 1,5 à 6,0% en poids de motifs copolymérisés de l'éther de perfluoro-n-propyle et de perfluorovinyle ainsi qu'en des motifs copolymérisés de tétrafluoréthylène.

3. Produit de revêtement et d'apprêt selon l'une des revendications 1 et 2, caractérisé en ce qu'il consiste en 12 à 60% en poids de matière sèche provenant de la somme des poids des constituants a) plus b) plus c) ainsi qu'en de l'eau.

4. Produit de revêtement et d'apprêt selon l'une quelconque des revendications 1 à 3, caractérisé en ce qu'il contient en outre des pigments et des charges.

5. Application du produit de revêtement et d'apprêt selon l'une quelconque des revendications 1 à 4, à l'enduction de métaux, du verre ou de subjectiles céramiques dans un procédé d'application d'une seule couche.

6. Application des produits de revêtement et d'apprêt selon l'une quelconque des revendications 1 à 4 à l'enduction de métaux, de verre ou de subjectiles céramiques, caractérisée en ce qu'on applique ensuite au moins une couche de couverture en polymère de fluorocarbone.